(19)

Europäisches Patentamt

European Patent Office

Office européen des brevets

(11) **EP 3 148 017 A1**

(12) **EUROPEAN PATENT APPLICATION**

(43) Date of publication:
**29.03.2017 Bulletin 2017/13**

(51) Int Cl.:
**H01S 3/08** (2006.01)    *H01S 3/094* (2006.01)
**H01S 3/213** (2006.01)

(21) Application number: **15186896.5**

(22) Date of filing: **25.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Consejo Superior de Investigaciones Científicas**
**28006 Madrid (ES)**

(72) Inventors:
• **CONSOLI BARONE, Antonio**
  **28049 Cantoblanco (MADRID) (ES)**
• **LOPEZ FERNANDEZ, Ceferino**
  **28049 Cantoblanco (MADRID) (ES)**

(74) Representative: **Pons**
**Glorieta Ruben Dario 4**
**28010 Madrid (ES)**

(54) **RANDOM LASER**

(57)    A random laser and a manufacturing method thereof are disclosed. The random laser (1) hereby described has a sandwich structure of an optical active medium (2) surrounded by uneven scattering surfaces (3) that enclose said optically active medium. The scattering surfaces show defects or pores (31) rendering a porous and /or rough surface allowing back-scattering. Said uneven surfaces may be be produced by depositing particles that generate pores when agglomerate in a random deposition or by introducing defects on the surfaces by any suitable process. The laser resonator may comprise feedback components (3) comprising TiO2 nanoparticles (32) and pores (31) between them resulting in random laser emission (4) through these components in case the random laser is pumped by light (5). The random laser emission comprises multi-mode emission with narrow linewidth peaks at random frequencies.

FIG.14

EP 3 148 017 A1

## Description

The invention relates to a laser generating device and more particularly, to a random laser.

BACKGROUND ART

Random lasers (RLs) are optical devices based on disordered structures, where the feedback for lasing action is given by a random distribution of scattering particles embedded with an optically active element.

Opposite to conventional lasers, RLs do not present a clearly defined optical cavity as light is trapped by multiple scattering, resulting in omnidirectional emission. The high brightness and low spatial coherence of RLs has been exploited in the first laser based speckle free imaging system [Redding, B., Choma, M. A. & Cao, H. Speckle-free laser imaging using random laser illumination Nature Photon. 6, 355-359 (2012)]. In general, the ease of fabrication of such devices is an extremely attractive element that makes possible the fabrication of RLs from a wide range of materials, e.g. colloidal solutions5, semiconductor powders, biological tissues, liquid crystals, optical fibres and polymer blends.

The peculiar spectral signature of a coherent RL is a multimode spectrum with sharp (sub-nanometer width) peaks and no evident spectral periodicity, the origin of such narrow spikes with sub-nanometre linewidths and placed at random frequency positions has puzzled scientists for long time. From the first experimental observations in Cao, H. et al. Ultraviolet lasing in resonators formed by scattering in semiconductor polycrystalline films. Appl. Phys. Lett. 73, 3656 - 3658 (1998), it was deduced that the observed narrow linewidth was originated by coherent feedback. Consequently, this kind of emission has been referred as coherent random lasing, opposite to the incoherent random emission, characterized by a single-peaked broad spectrum (few nanometres) and attributed to amplitude-only feedback.

In general, the spectrum of a coherent RL is uniquely associated to the specific random distribution of its scattering elements, which affects the spatial distribution of modes and consequently the spectrum. Through optimization of the pump transverse profile, it is possible to control random lasing characteristics, e.g. excited frequencies and emission direction.

All the previously reported experimental and theoretical works on coherent random lasing, consider a RL architecture based on spatially distributed feedback mechanism, in which scattering particles and active material share the same region of space; nonetheless experiments were performed on a structure consisting of an optically active crystal and a cavity formed by one mirror and one scattering Surface [Ambartsumyan, R. V., Basov, N., Kryukov, P. & Letokhov, V. S. A laser with a nonresonant feedback. IEEE J. Quantum Electron. 2, 442-446 (1966) and Ambartsumyan, R. V., Basov, N., Kryukov, P. & Letokhov, V. S. Non-resonant feedback in lasers. Prog. Quant. Electron. 1, 107 - 120 (1970)] however, no coherent random lasing was obtained in those experiments.

This kind of spectrum will be observed for the first time, only about 30 years later [see Cao, H. et al. Ultraviolet lasing in resonators formed by scattering in semiconductor polycrystalline films. Appl. Phys. Lett. 73, 3656 - 3658 (1998)] in a distributed feedback RL, consisting of randomly distributed nanoparticles of active material.

In conventional RLs, the feedback for lasing action is given by the ensemble of randomly distributed scattering centers embedded with the active material. The feedback mechanism is then spatially distributed along the laser structure. This point represents a major drawback of the distributed feedback architecture, as it necessarily gives two counteracting roles to the scattering centres: they contribute to light confinement and optical feedback but deteriorate light amplification, through scattering losses, eventually preventing lasing action. In other words, in such a random laser, the balance between scattering mean free path and gain length determine the lasing regime [see Wiersma, D. S. and Lagendijk, A. Light diffusion with gain and random lasers. Phys. Rev. E 54, 4256-4265 (1996)]. Separation of these two fundamental laser elements, gain and feedback, while maintaining the spatially and spectrally random feedback due to disordered media, allows the realization of RLs with higher efficiency and more flexible design. In fact, the gain can be increase through proper design of the active medium, independently from size, number and distribution of scattering elements, thus without varying the scattering losses.

Here, we report coherent random lasing from a novel architecture in which the feedback elements are spatially localized at the edge of an amplifying active region.

SUMMARY OF THE INVENTION

A first aspect of the invention is aimed to a random laser (RL) based on the assumption that frequency dependent amplitude and phase response of the back-scattering surfaces have arbitrary spectral profiles. A second aspect of the invention is aimed to a method for manufacturing the random laser of the first aspect of the invention.

The observed behavior of the random laser of the invention is interpreted with an analogy with classical optical resonators, where specular mirrors are used instead of rough scattering surfaces. Radiation is trapped between scattering regions inside the active material where it is successively amplified at each round trip. Selection of narrow modes is due to the joint phase contribution of each scattering surface, which randomly back-scatters received radiation in all directions with different phase delay.

The random laser of the first aspect of the invention is defined by a sandwich structure where an optical active medium y enclosed by two uneven surfaces defining respective walls, those two uneven surfaces acting as scattering elements, having a refraction index value different to that of the optically active medium.

Each or both of the uneven scattering surfaces may be rough surfaces or porous surfaces, in that sense each or both of the uneven surfaces may comprise pores and/or roughness. The key is that the surfaces act as back-scattering elements.

Any one or both of the uneven surfaces may be defined by:

- An agglomeration of particles, wherein the gaps between particles generate pores; or
- A surface showing a profile with deviations in the direction of the normal vector of a real surface from its ideal form.

In a first embodiment of the first aspect of the invention the random laser has a sandwich structure in which gain region and feedback elements are spatially separated. Said structure sandwich structure has preferably two surfaces respectively comprising random agglomerations of highly scattering particles, for example titanium dioxide nanoparticles although any suitable scattering particle may be used, which are placed near the edges of an optically pumped active medium, like a dye solution, a semiconductor or any suitable optically active medium. As a result of said structure pores are defined by the gaps generated between nanoparticles since the agglomerations have a plurality of particles which are in contact with each other generating gaps that define pores; as a consequence, the same spectral signature, consisting of sharp spikes with random spectral positions, is detected emerging from both agglomerations of highly scattering particles.

In a second embodiment of the first aspect of the invention the random laser has a sandwich structure in which gain region and feedback elements are spatially separated as per the first embodiment, but in this second embodiment said structure sandwich structure has rough surfaces placed near the edges of the optically pumped active medium; the irregularities or roughness of the rough surface act as the pores of the first embodiment, thus contributing to achieve the same result of the first embodiment is achieved, namely a spectral signature with sharp spikes with random spectral positions emerges from the rough surfaces.

A second aspect of the invention is aimed to a method for producing the random laser of the first aspect of the invention. For this purpose, the uneven scattering surfaces are generated by any suitable means (the modification required may be carried out by a process such as: chemical attack, mechanizing, or moulding); depending on the embodiment chosen; once the scattering surfaces are produced the optically active medium is then enclosed between the uneven scattering surfaces; producing the aforementioned sandwich structure.

In a first embodiment of the second aspect of the invention, the sandwich structure is obtained by introducing defects on two of the surfaces of the optically active material by any suitable means; generating thereby rough surfaces. This means that the random laser of the invention may be produced by generating defects on two opposite surfaces of a medium, for example producing defects on the surfaces of a crystal or on the edges of a doped polymeric film. For example the random laser may be manufactured by enclosing an active region, a DCM doped DNA-CTMA polymer film, between two rough scattering surfaces, where scattering centers are randomly positioned.

In a second embodiment of the second aspect of the invention, the sandwich structure is obtained by deposition of particles on two of the surfaces of the optically active material by any suitable means; generating thereby the aforementioned gaps that define the pores.

It is also envisaged an alternative embodiment where the random laser is the result of a mix of both the first and the second embodiments of each aspect, this means that the random laser has one rough surface and one porous surface, the latter being achieved by the deposition of random agglomeration of particles producing the gaps that the define the pores. Each surface may be produced as per the respective method selected from the embodiments of the second aspect of the invention.

The main difference with commonly used RLs, is that no distributed feedback inside the active material is imposed, the scattering regions being positioned at the edges of the pumped area. The entire structure is working as a single optical oscillator where the scattering regions act as feedback elements and output couplers.

Possible uses of this random laser are lighting, display and imaging applications.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings are provided by way of illustration and are not intended to be limiting of the present invention.

**DESCRIPTION OF THE DRAWINGS**

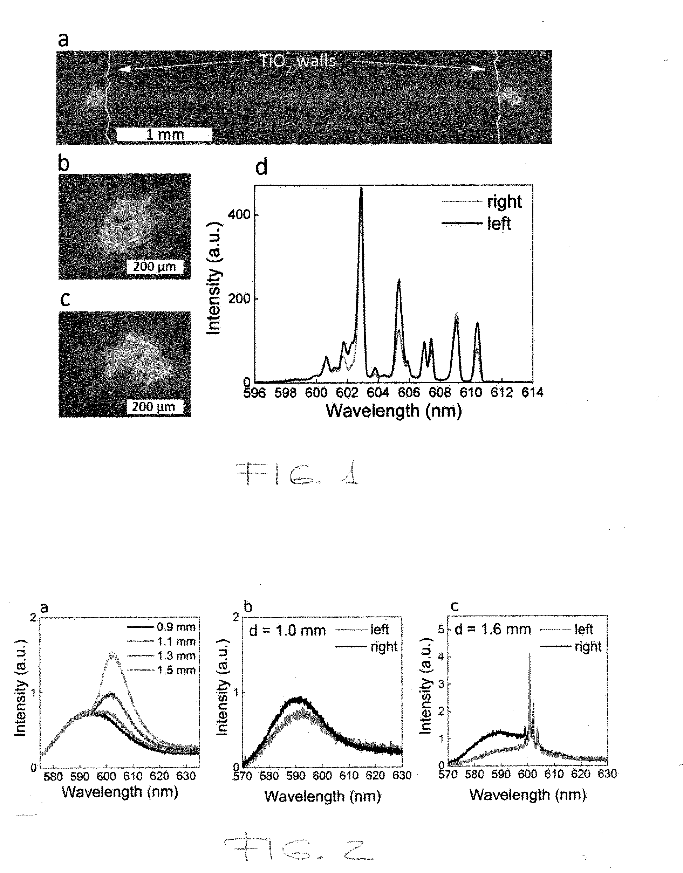

**Figures 1a- 1d** Depict a coherent random lasing from spatially localized feedback architecture. Figure 1a shows a sample image. Figures 1b and 1c show respective zoomed views of the emitting regions in left and right agglomerations of $TiO_2$. Figure 1d shows the measured spectra from left (black line) and right (gray line) emitter. The geometry parameters are d = 4.0 mm, $L$ = 3.8 mm, $W$ = 150 $\mu$m and the pump energy is 25 pJ/pm$^2$.

**Figures 2a - 2c.** Depict below and above threshold emission regimes. Figure 2 a shows spontaneous emission and ASE detected from the dye solution free of scatterers, obtained with different pump lengths between 0.9 mm and 1.5 mm . Figure 2b shows the spectra collected from left (gray lines) and right (black lines) diffusive mirrors in different laser structures with d = 1.0 mm Figure 2c shows the spectra collected from left (gray lines) and right (black lines) diffusive mirrors in different laser structures with d= 1.6 mm. Figure 2d shows the spectra collected from left (gray lines) and right (black lines) diffusive mirrors in different laser structures with L = 0.9·d.

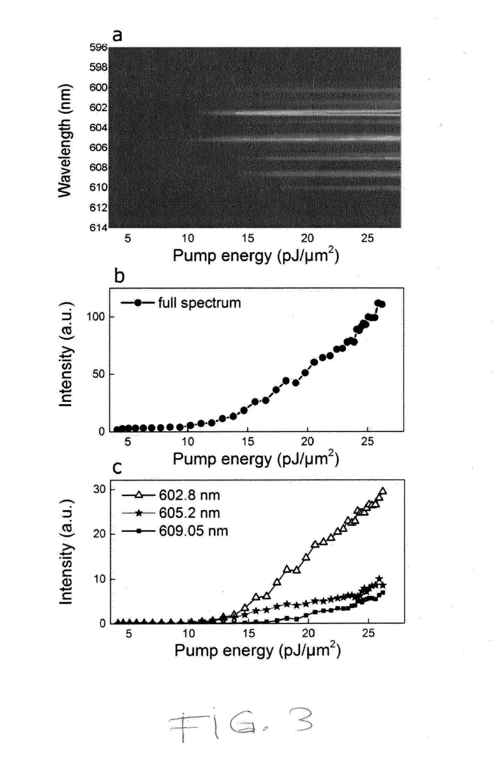

**Figures 3a - 3c .** Depict a pump dependent emission spectrum. Figure 3a shows the measured spectra as a function of the pump energy. Figure 3b shows the total detected intensity integrated over the frequency range of measurement. Figure 3c shows the peak intensity of three modes at 602.8 nm (triangles), 605.2 nm (star symbol) and 609.05 nm (full squares), as a function of the pump energy.

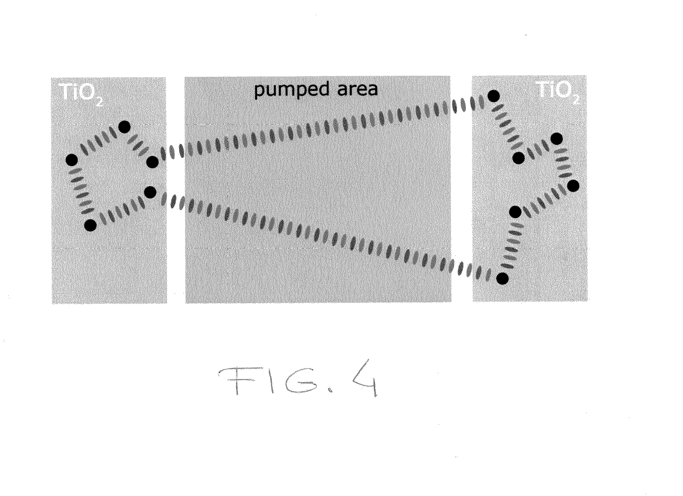

**Figure 4.** Depicts a schematic description of the round trip phase condition. The device architecture is schematically depicted with pumped region and $TiO_2$ elements given by yellow and gray areas, respectively. Scattering centers are shown as black full circles and travelling light is pictured with intercalated red and blue ellipses, schematically rendering the wavefronts.

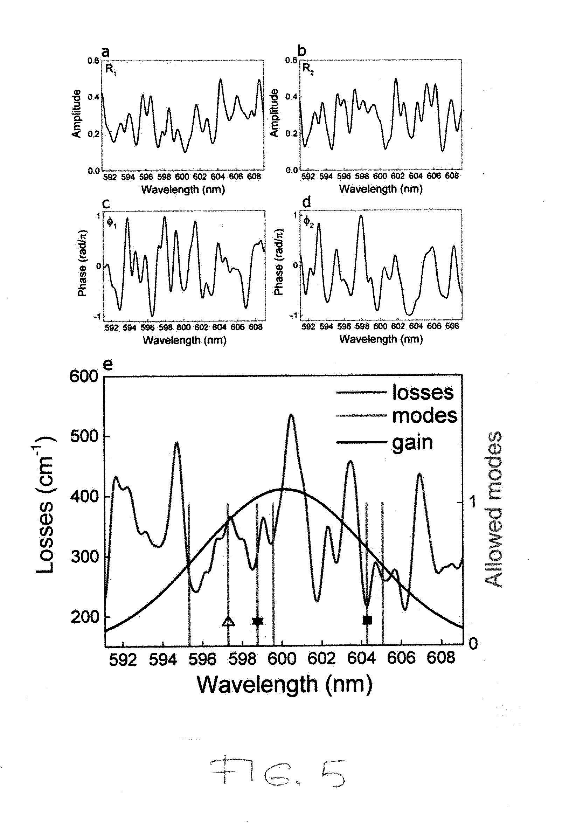

**Figures 5a - 5e.** Depict simulation results: gain, losses and allowed modes. Figure 5a shows the amplitude function $R_1$ (a) versus wavelength. Figure 5b shows the amplitude function $R_2$ versus wavelength. Figure 5c shows the phase response $\phi_1$ versus wavelength. Figure 5d shows the phase response $\phi_2$ versus wavelength. Figure 5e shows losses (gray line) and allowed modes (red line) after evaluation of Eq. 2 and Eq. 3. The gain shape (thick black line) is also shown. Three modes at 597.3 nm, 598.8 nm and 604.3 nm are highlighted with symbols: triangles, stars and full square, respectively.

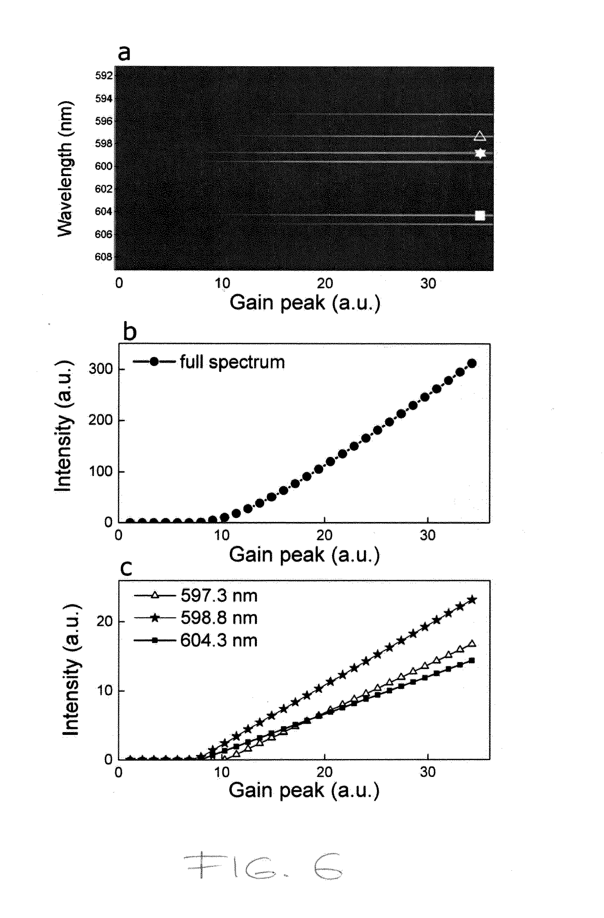

**Figures 6a 6c.** Depict simulation results with increasing gain. Figure 6a shows emission spectra as a function of gain, with three modes at 597.3 nm, 598.8 nm and 604.3 nm, highlighted with symbols: triangles, stars and full squares, respectively. Figure 6b shows spectral intensity integrated over the full frequency range as a function of gain. Figure 6c shows peak intensity of three modes at 597.3 nm (triangles), 598.8 nm (stars) and 604.3 nm (full squares).

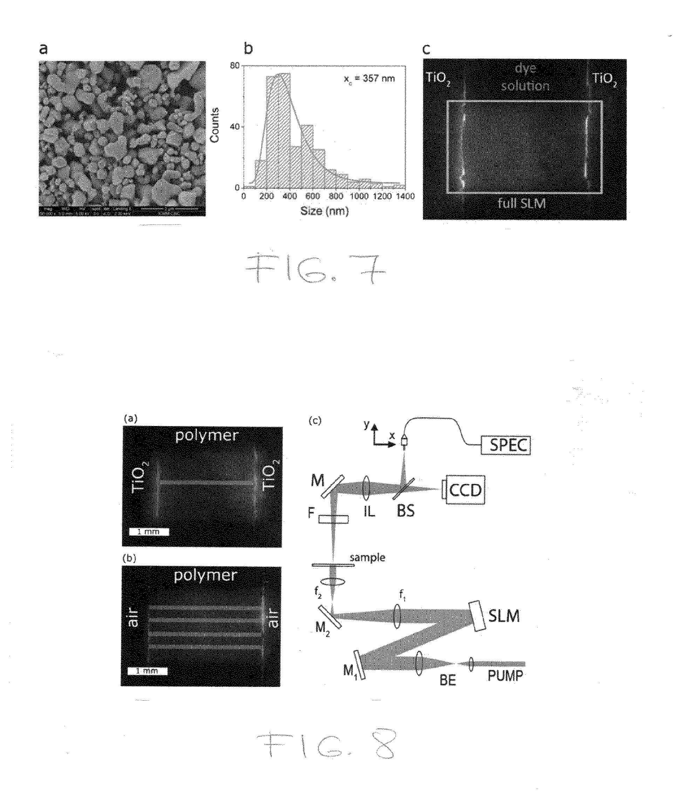

**Figures 7a - 7c.** Depict the Sample characterization. Figure 7a shows a SEM image of the $TiO_2$ powder used in sample preparation. Figure 7b shows a particle size distribution extracted from SEM images. Figure 7c shows an image of a region of a sample, consisting of dye solution (dark gray area) and $TiO_2$ agglomerations (light gray areas). The full SLM screen is highlighted with a rectangle.

**Figures 8a - 8c.** figure 8a shows an image of the sample with $TiO_2$ particles when illuminated at low pump flux with full SLM screen, where rectangular regions correspond to the excited regions in lasing experiments. Figure 8b shows an image of the sample without $TiO_2$ particles when illuminated at low pump flux with full SLM, where rectangular regions correspond to the excited regions in lasing experiments. Figure 8c shows a diagram of an experimental set-up.

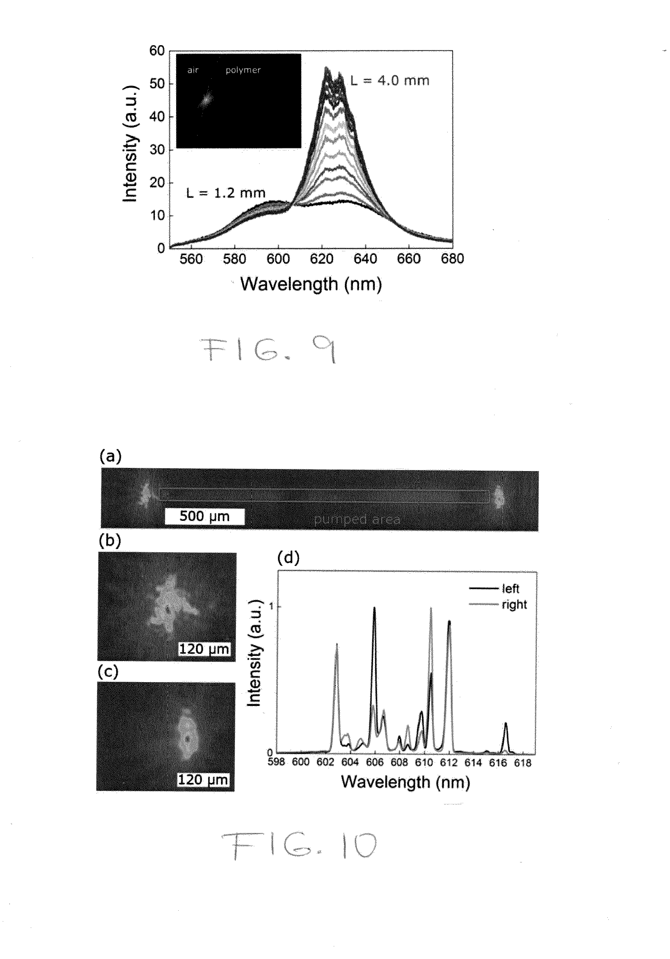

**Figure 9.** Depicts ASE measured for different stripe lengths, varied between 1.2 mm and 4.0 mm. As an example, the inset shows the CCD image for measurement with L = 2.8 mm.

**Figures 10a - 10d**. Figure 10a shows experimental results obtained with sampled with $TiO_2$: CCD image of the pumped region and emitting areas. Figure 10b shows a zoomed view of the left emitting region. Figure 10c shows a zoomed view of the right emitting region. Figure 10d shows the normalized measured spectra from the left (black line) and right (gray line) emitting regions.

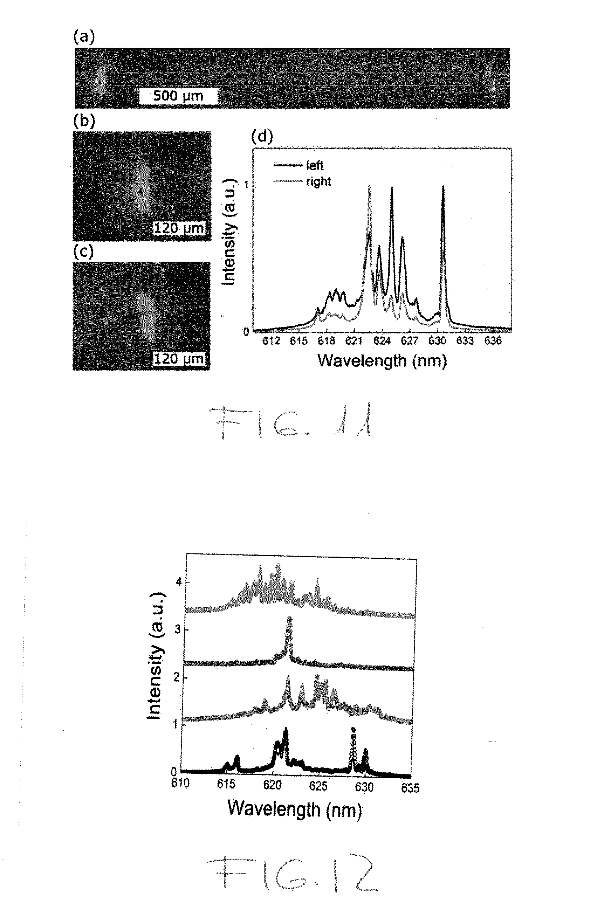

**Figures 11a - 11c.** Figure 10a shows experimental results obtained with sampled without $TiO_2$: CCD image of the pumped region and emitting areas Figure 11 b shows an zoomed view of the left emitting region. Figure 11 b shows an zoomed view of the right emitting region and right. Figure 11d shows the normalized measured spectra from left (black line) and right (gray line) emitting regions.

**Figure 12.** Shows normalized measured spectra emitted from left (lines) and right (open circles) laser ends, pumping the polymer film without $TiO_2$ in different positions (different gray tone in figure), highlighted in Fig. 1 (c) with rectangles.

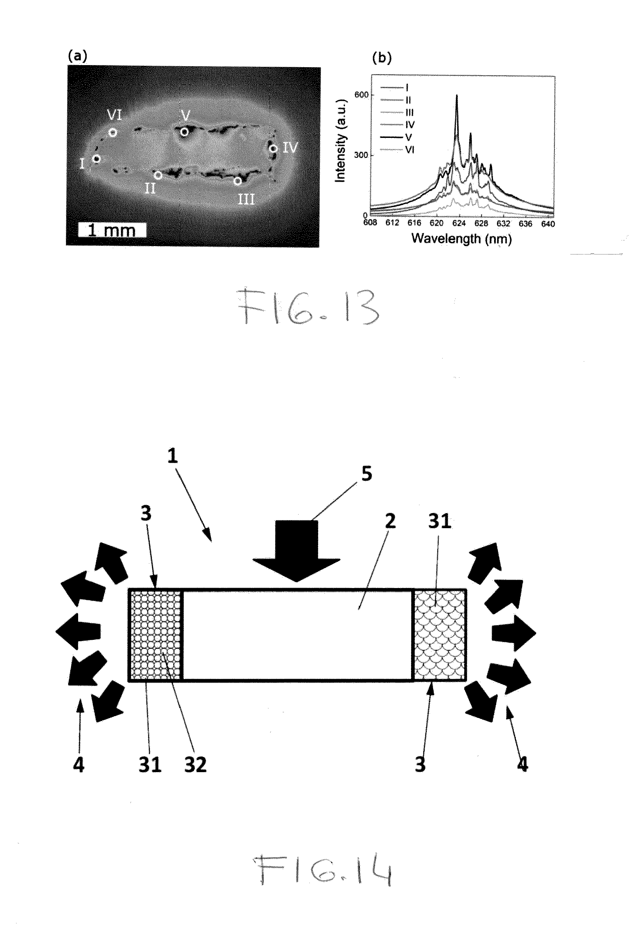

**Figures 13a - 13b**. Figure 13a depicts experiments performed with a uniformly pumped device with dimensions of 2.6 mm×0.65 mm. Figure 13b depicts emission spectra detected from the devices edges at points labelled I-VI (b).

**Figure 14.** Depicts a schematic diagram of the proposed random laser of the invention showing the optically active medium, the scattering surfaces, the emitted radiation, the external energy source, being the scattering surfaces defined by pores, particles and gaps.

## PREFERRED EMBODIMENT

In a preferred embodiment of the invention of a first aspect of the invention a coherent random laser (1) in which the randomly distributed scattering centres are placed outside the active region is provided.

This architecture may be implemented by enclosing an optical active medium (2) - which is made of a material emitting light when excited - between two scattering surfaces (3) that may comprise agglomerations of randomly positioned nanoparticles (i.e. titanium dioxide nanoparticles although any other suitable material may be used) acting as scattering surfaces (3) as shown in the right side of the random laser (1) depicted in figure 14 where a random laser (1) is provided showing a representation of an emitted radiation (4) and an external energy source (5). The random laser (1) shown in figure 14 comprises a sandwich structure with two scattering surfaces (3), with a first refractive index value, enclosing an optically active medium (2), with a second refractive index value, arranged between the surfaces (3); wherein the scattering surfaces (3) are uneven and the first refractive index value is different to the second refractive index value.

Since we needed the surfaces (3) to be uneven, in a preferred embodiment of the first aspect of the invention at least one of said surfaces (3) may comprise a plurality of particles (32) and gaps (33)- preferebaly nanoparticles with a maximum size of 30 nanometers or microparticles with a maximum size of 300 micron and made of $TiO_2$, SiO, or polymers - which are in contact with each other generating gaps that define pores (31) whereas in an alternative embodiment at least one of the surfaces (3) comprises pores (31) or defects. The same spectral signature, consisting of sharp spikes with random spectral positions, is detected emerging from both ensembles of Ti02 (titanium dioxide) nanoparticles. This behaviour is due to the optical feedback given by back-scattered light from the scattering surfaces (3) namely the randomly positioned nanoparticles agglomerations, which also acts as output coupler. In tis preferred embodiment of the first aspect of the invention $TiO_2$ is selected as scattering material, nonetheless different active and scattering materials may be used.

In this way, we generate a pumped area delimited by two porous "walls" of $TiO_2$ with irregular and rough surfaces defining the scattering surfaces (3). Image of the sample was detected with a CCD camera and spectra were collected with a 105 $\mu$m core diameter fibre and sent to the spectrometer. The pumped area is a rectangle with horizontal length L and vertical width W. The length L is kept smaller than the separation, d, between the diffusive walls of $TiO_2$, so that the dye that eventually infiltrated the $TiO_2$ agglomerations is not pumped. Figures 1 a-1 d show the results obtained with d = 4.0 mm, L = 3.8 mm and W = 150 $\mu$m. The pump density is EP = 25 pJ/$\mu$m2. A representation of the random laser (1) of the first aspect of the invention system is shown, in figure 1 a, where the pumped area is the rectangular region (highlighted with dashed line) between the diffusive walls of titanium dioxide (outlined with white lines). The regions of the $TiO_2$ agglomerations facing the two horizontal ends of the pumped area emit intense light in the out of the plane direction: a zoomed view is shown in Fig. 1 b and 1 c, for left and right $TiO_2$ region, respectively. Local maxima and minima of intensity suggest that spatial interference due to multiple scattering is taking place in each region. Although similar "hot spots" are common in RL with distributed feedback, we recall that in our device no gain is present inside the clusters, posing a relevant difference with conventional RLs.

The spectra collected from each $TiO_2$ agglomerations are shown in Figure 1d. Typical signature of coherent random lasing is observed: a multi-mode emission with narrow linewidths at random frequencies. But most importantly, the same frequency peaks are detected from both scattering elements.

The lasing threshold of the random laser (1) of the invention is the result of the gain contribution given by the rectangular pumped area and the losses introduced by the $TiO_2$ agglomerations. At constant pump energy density, longer devices lase, while shorter devices only emit below threshold with ASE; this is shown in Fig. 2b and 2c, where two different device geometries are considered with two values of d, with L kept slightly shorter than d and pumped with the same energy density EP = 25 pJ/pm2. For d = 1.0 mm, a broad noisy spectrum with FWHM of about 18 nm is detected from both laser ends. In this condition, the ASE from the pumped area is scattered off the plane from the $TiO_2$ regions, and no lasing action occurs. For d = 1.6 mm, lasing takes place and the same set of modes is observed from both ends of the laser, superimposed on the broad ASE background. With this geometry and at the same energy density EP, the device is lasing slightly above threshold.

Using the geometry shown in Fig. 1, the results for the emitted spectra from one laser end as a function of EP are shown in Fig. 3a. For low values of EP, only a broad ASE spectrum is measured. As the pump energy is increased, two modes start to lase at 602.8 nm and 605.2 nm, for EP = 13 pJ/$\mu$m2. At higher energies, more peaks appear and grow with increasing pump energy. Notably, the spectral position of the excited modes is constant with EP. In Fig. 3b, the spectral intensity integrated over the entire frequency range of detection is plotted. A clear threshold knee is observed between EP = 10 pJ/$\mu$m2 and EP = 15 pJ/$\mu$m2 and an almost linear increase is observed for higher values of EP.

The first two lasing mode and a further mode at 609.5 nm are selected for monitoring their growth as a function of the pump energy. Figure 3c shows their intensities as a function of the pump energy. The same threshold (EP = 13 pJ/$\mu$m2) is observed for modes lasing at 602.8 nm and 605.2 nm, after which they grow with different slopes. The mode at 609.05 nm has a higher threshold of 17 pJ/$\mu$m2 and then it grows with moderate slope value.

It is well known that the backscattered light intensity from diffusive reflectors is maximum for $\theta = 0$, where $\theta$ is the angle between the incident and backscattered light directions. This is due to the coherent contribution for $\theta = 0$, where the scattered light has a $2\theta$ phase delay with respect to the incident light. The backscattering cone is the resulting intensity distribution as a function of the detection angle, being maximum at $\theta = 0$ and decreasing for larger $\theta$. We believe we can safely assume that our quasi two dimensional structures obey this behavior. In the structure of one of the preferred embodiment of the random laser of the invention (1), both $TiO_2$ walls act as scattering surfaces (3). The phase difference between the incident and back-scattered light is exactly $2\pi$ for $\theta = 0$. However, considering that the width of the pumped area is not infinitely narrow, back-scattered light from one $TiO_2$ region propagates and is amplified along directions with back-scattering angles different from zero. Along these paths the phase contribution of the diffusive reflectors of $TiO_2$ assumes a random value, as belonging to the incoherent component of the back-scattering cone, being $\theta \neq 0$.

This is shown in the schematic illustration of figure 4, which shows the case of a single lasing frequency mode. Schematically, the scattering path in each $TiO_2$ element (grey areas) add an arbitrary phase contribution to the back-scattered light, which travels back to the other random laser (1) end, where another arbitrary phase contribution is added before the light is back-scattered again into the active region (gray area). If the considered frequency adds up to an integer number of wavelength periods in a round trip, given the arbitrary phase contribution of each diffusive reflector, it will be allowed in the cavity and grow. Contrary to the case of a ring laser, a closed trajectory allows only one frequency mode, the one that satisfies the selection criteria given by the phase contributions of the diffusive reflectors in one round trip.

Concerning the amplitude of the back-scattered wave at one frequency, it depends on the scattering losses of the specific path along which that frequency is traveling. This equals to say that losses of the $TiO_2$ regions vary with frequency. Considering that both the amplitude and phase response of the back-scattering $TiO_2$ elements are frequency dependent and have arbitrary spectral profiles, then the complex spectral response of the back-scattering reflectors may be expressed as $R_{1,2}(v) \cdot \exp[i\phi_{1,2}(v)]$, where $R_{1,2}(v)$ are the amplitude components, $\phi_{1,2}(v)$ the phase components, v the frequency variable and $i$ the imaginary unit.

We introduce $R_{1,2}(v) \cdot \exp[i\phi_{1,2}(v)]$ into the well-known round trip condition of a conventional laser and obtain:

$$R_1(v)R_2(v)e^{2L(g-\alpha)}e^{i(k2L+\phi_1(v)+\phi_2(v))} = 1 \qquad \text{Eq.1}$$

L being the active medium length, g the linear gain, $\alpha$ the absorption and k the wave vector. The path lengths travelled inside the $TiO_2$ agglomerations were modeled with arbitrary frequency dependent responses, where the losses are taken into account in the amplitude part and the coherent contribution in the phase part. A similar argument allows us to neglect the spatial variation of L, given by L $\pm$ $\Delta$L, where $\Delta$L is a random distribution of lengths in the order of tens of micrometers, due to the roughness of the $TiO_2$ agglomerations. In fact, the gain and losses contributions into the active medium, are poorly affected by $\Delta$L as $\Delta$L << L and the phase delay introduced only adds a random phase, that can be considered as already included in the term $\phi_1(v) + \phi_2(v)$.

Equation 1 can be separated into an amplitude condition:

$$g_{TH}(v) = \alpha + \frac{1}{2L}\ln\left(\frac{1}{R_1(v)R_2(v)}\right) \qquad \text{Eq. 2}$$

where $g_{TH}(v)$ is the frequency dependent threshold gain, and into a phase condition:

$$v \frac{n}{c} 2L + \frac{\phi_1(v) + \phi_2(v)}{2\pi} = m \qquad \text{Eq. 3}$$

where $m$ is an integer number and the relation $k = 2\pi vn/c$ has been used, with $n$ being the refractive index and c the speed of light in vacuum.

The amplitude equation (Eq. 2) simply states that for reaching threshold, the gain must be equal to the sum of a fixed term of internal losses and a frequency dependent term, given by the joint contribution of the reflective amplitude components of the diffusive reflectors. In a classical laser, the mirror losses are constant with frequency and consequently losses are the same for all wavelengths.

The phase equation (Eq. 3) would reduce to the classical Fabry-Perot solution with equally spaced, c/(2nL), frequency modes if the phase term $(\phi_1(v) + \phi_2(v))/2\pi$ is constant, as it is the case with specular mirrors. Considering our system, satisfaction of Eq. 3 represents the lucky event in which, given a certain frequency $v$ and the phase contribution $(\phi_1(v) + \phi_2(v))/2\pi$, an integer number of wavelength periods fits the round trip.

Reflectivities $R_1(v)$ and $R_2(v)$ are numerically implemented with arbitrary shapes, see Fig. 5a and 5b, respectively. We consider smooth profiles with few peaks contained in the gain spectral window with arbitrarily minimum and maximum reflectivity values. Qualitatively similar results are obtained with different parameters: sharper peaks and larger reflectivity excursion result in a spread distribution of modal threshold values.

Phase responses $\phi_1(V)$ and $\phi_2(v)$ are numerically implemented with smooth spectral profiles and arbitrary values between $-\pi$ and $+\pi$, with a resolution of 0.1 mrad, as shown in Fig. 5c and 5d, respectively.

The key element in the numerical construction of $R_{1,2}(v)$ and $\phi_{1,2}(v)$ is that their values have to be spectrally uncorrelated, *i.e.* varying arbitrarily from frequency to frequency. We have numerically implemented different kind of spectral profiles, from very abrupt spectral changes (presented in Supplementary material) to smooth transitions, as the ones shown in Fig. 5. Qualitatively, the same results are obtained in both cases.

Other simulations parameters are set according to experimental conditions, with length L = 4 mm, dye refractive index n = 1.5 and internal losses deduced from dye characterization, obtaining $\alpha$ = 9.8 cm$^{-1}$. The gain spectral profile is assumed gaussian, centered at 600 nm and with a FWHM of 10 nm. The frequency vector spans 15 THz (18 nm at 600 nm) with a resolution of 150 MHz (0.18 pm at 600 nm). Equations 2 and 3 are implemented in the frequency domain and results are plotted as a function of wavelength, in order to easily compare with experimental results.

Figure 5e shows calculated losses, corresponding to the right side of Eq. 2, the allowed modes, resulting from evaluation of Eq. 3, and the gain shape. Few allowed frequencies are observed (six modes in the presented simulation), with irregular spacing and no spectral periodicity. Depending on their spectral position, each mode sees a different balance between gain and losses, resulting in different thresholds and slopes. The number of allowed modes and their positions depend on how many times and where, Eq. 3 is satisfied. These are unpredictable events, given the arbitrary and spectrally uncorrelated contributions of $\phi_1(v)$ and $\phi_2(v)$ at each frequency, resulting in a random number of randomly distributed frequency modes.

If the random phases are changed with respect to the presented simulation results, different sets of modes are obtained, which correspond to different pairs of diffusive mirrors. In simulation, the spectral gain was increased and Eq. 2 were evaluated, given the allowed frequency modes from Eq. 3, obtaining the emission spectrum as a function of the gain. Results are shown in figure 6a. All modes have different threshold values and different slopes.

The spectral energy integrated over the full frequency range is shown in figure 6b where a linear increase is observed after the first lasing modes appear. A detailed view of the mode evolution is given in figure 6c, where the intensity peaks of three modes at 597.3 nm, 598.8 nm and 604.3 nm are plotted as a function of the gain. Modes at 598.8 nm and 604.3 nm present the same threshold, despite the fact that at 598.8 nm more gain is available: this is because of the low losses at 604.3 nm (see figure 5e). The net gain must be evaluated at each frequency and low gain spectral region where a frequency mode is available can lase first if losses are small enough.

As opposite example, the frequency mode at 597.3 nm has higher threshold despite experiencing near peak gain, due to the high scattering losses at its frequency.

In general, allowed frequency modes placed near the peak of the gain are more likely to have lower threshold, however the modal threshold distribution depends on the scattering losses in the entire frequency range of emission.

A set-up as that depicted in figure 8c was used; said set-up having a pump source defined by a Q-switched Nd:YAG laser, with its frequency doubled at 532 nm (Litron NanoT250), emitting 10 ns pulses, at 10 Hz repetition rate. The pump transverse profile was shaped with a Spatial Light Modulator (SLM, Holoeye LCR-1080) operating in amplitude24 whilst the SLM liquid crystals screen were computer controlled and an arbitrary mask was sent to the device in the form of a matrix (1920x1200 elements) of black (non-reflective) and white (reflective) pixels. The amount of the reflected light was controlled by imposing a variable gray level to the active pixels of the SLM. The SLM image was

reduced ($\times$0.15) with a pair of convex lenses with focal length f1 = 20 cm and f2 = 3 cm. Polarizing dichroic mirrors (M1, M2) were used in order to have linearly polarized light hitting the sample and a beam expander (BE, $\times$5) was used to uniformly shine the SLM. An optical filter (F) was placed after the sample for stopping the pump light. A large area of the sample (5.7 mm $\times$ 4.27 mm) was imaged (1:1) onto a CCD (Pixelink model PL-B776F) camera and on a connectorized fibre end (105 $\mu$m core diameter) with an imaging lens (IL, 15 cm focal length) and a beam splitter (BS). The fibre core acted as a spatial filter which collects a circular area on the sample with the dimension of its core. Fibre collected light was sent to a 303-mm focal length spectrograph (SPEC, Andor, Shamrock 303) connected to a low-noise charge-coupled device array (Andor, iDus Spectroscopy CCD). Light was collected from different regions of the sample by moving the fibre horizontally and vertically with two computer controlled translation stages.

In a second aspect of the invention a method for manufacturing the random laser (1) of the first aspect of the invention is hereby provided. Said method is mainly based on generating the uneven scattering surfaces (3) and producing a sandwich structure by enclosing the optically active medium (2) between the uneven scattering surfaces (3).

The generation of the uneven scattering surfaces (3) may be carried out by either fixing particles (32) along at least one of the scattering surfaces (3), preferably fixing them randomly along at least one of the scattering surfaces (3) by particle deposition techniques, said particles (32) being arranged in such a way that gaps (33) are defined between the particles (32) or by modifying at least one of the scattering surfaces (3) by chemical attack, mechanizing, or moulding so that pores (31) are generated; or by a mixed technique comprising both processes

Titanium dioxide powder (rutile, Sigma Aldrich 224227) was used and was first characterized by a Scanning Electron Microscope (SEM) analysis (see image shown in Fig. 7a). Irregular shapes and very different particle size were observed so a set of ten images obtained from the SEM measurements were analyzed and as a result of that analysis a mean particle size of 357 nm was determined , as shown in Fig. 7b. A solution was prepared with 5 mL of distilled water and 20 mg of Ti02 powder. A small quantity (20 $\mu$L) of the solution was then dropped onto a glass substrate, which had been previously hydrophilized with a 20 min bath in chromic acid. The substrate was then placed below a 60 W lamp for 20 minutes, after this time all water was evaporated and a layer of Ti02 was fixed to the substrate.

A selected region of the Ti02 layer was mechanically removed, obtaining an area of the sample free of Ti02 and delimited by two rough regions of Ti02. A solution of Rhodamine B (0.5 vol. % in equal parts of ethanol and ethylene glycol) is dropped (10 $\mu$L) onto the substrate. Two 50 $\mu$m thick aluminium spacers are placed outside the dye drop, and a plastic cover slip is then positioned onto the sample. Our sample is now squeezed between the glass substrate and the plastic coverslip and it consists of two large "walls" of Ti02 placed at the edges of the dye solution. A typical image is shown in Fig. 7c, where also the full screen of the Spatial Light Modulator, SLM,

In a preferred embodiment of the second aspect of the invention the scattering surfaces (3) were obtained by deposition of high fraction aqueous suspension of Ti02 nano-particles on a glass substrate. After water evaporation, regions of the deposited thick layer are selectively removed, obtaining an area free of scatterers where a dye solution (Rhodamine B) is successively added defining the optically active medium (2). The active region was defined by illuminating a selected area of the dye using a Spatial Light Modulator (SLM) in reflection which shapes the transverse beam profile of a frequency doubled (532 nm) Q-switched Nd:YAG laser24. The pump energy hitting the random laser (1) of the invention can be finely tuned by changing the reflectivity of the active pixels of the SLM. The ASE from the optically active medium has been characterized by illuminating a stripe of the dye solution with no scatterers and collecting the light deflected from the edges of the dye drop. The length of the stripe is varied between 0.9 mm and 1.5 mm and the measured spectra are shown in Fig. 2a. A broad spectrum with peak intensity at 590 nm is detected for small values of the pump length L. As L is increased, the emission peak shifts at 600 nm and the spectral width narrows to about 10 nm. The peak spectral shift is attributed to the partial overlap of absorption and fluorescence bands in Rhodamine dyes. The peak intensity increase is due to the longer amplification path along which the ASE is travelling as L is increased.

An alternative embodiment of the second aspect of the invention is that based on a doped polymer film, like a dye-doped biopolymer films. For this embodiment a DNA-CTMA complex was dissolved in ethanol and mixed with an ethanol-chloroform solution. Two kinds of devices are fabricated: with and without addition of scattering nano-particles of TiO2.

Samples with scatterers were obtained as follows: glass substrates were hydrophilized with a 20 minutes bath in chromic acid and a high concentration aqueous suspension of TiO2 nano-particles (Sigma-Aldrich 224227) is dropped onto the glass substrate. After water evaporation, regions of the deposited thick layer were selectively removed, obtaining two parallel "walls" of Ti02 particles, namely the uneven scattering surfaces (3) placed at 2.7 mm from each other with a clean region in between. The active polymer in liquid form was successively added and samples were dried into the oven at 45°C for 5 minutes.

In random lasers (1) with no scattering elements, Ti02 deposition was not performed and the DCM-doped DNA-CTMA complex solution was directly dropped onto the glass substrate. The polymer was dried at 45°C for 5 minutes in the oven, obtaining a large patch of active material with circular shape with diameter of about 1 cm. Two parallel cuts at a distance of about 3 mm were performed onto the polymer film and the external regions of the film were ripped away from the substrate. In this way, we obtained a large stripe (with length of 1 cm) and width of 3 mm, with rough and irregularly shaped edges where the unwanted film was removed.

The set-up used was the same as earlier described. ASE emitted from the polymer film was characterized when no lasing structure was realized on the sample, neither with addition of TiO2 or by ripping away the excess film regions. A sample for ASE characterization was obtained after deposition of a drop of polymer in liquid form onto the glass substrate, the sample was dried and a very large circular area of about 1 cm was obtained.

A stripe shaped pump was projected onto the sample, with one end of the stripe located at the edge of the film. In this way, an ASE flux was established, which travels along the longitudinal direction of the stripe, and was scattered off the plane at the edge of the film (see inset of Fig. 2).The length L of the stripe was varied between 1.2 mm and 4 mm and the emitted spectra are measured at each value of L, as shown in Fig. 2. A very broad spectrum with Full Width at Half Maximum (FWHM) of 80 nm was measured for L = 1.2 mm, centered around 610 nm. As L was increased, the gain peak moves to 625 nm and the FWHM narrowed down to 24 nm. This is attributed to the transition from the broad fluorescence spectrum to the narrower ASE emission, with the red shift due to solvatochromic effect of DCM dye in polymer.

Experiments for lasing emission were performed on two kinds of random lasers (1) fabricated: with and without addition of scattering particles of $TiO_2$. The active region of the samples was illuminated with a rectangular-shaped pump beam of width $W$ = 50 $\mu$m and length L = 2.7 mm, for samples with $TiO_2$ and L = 3.0 mm for sample without $TiO_2$, see Figures 1 a and 1 b. The pumped area was oriented in such a way that the longitudinal ends of the rectangular pump were placed close to the edges of the active area. The pump energy flux was 20 pJ/pm$^2$. Results are shown in Figures 3a - 3d) and in Figures 4a- 4d), for samples with $TiO_2$ and without $TiO_2$, respectively.

In both cases, the same qualitative behavior was observed. Emission was detected at the ends of the pumped area from the scattering regions with local maxima and minima of intensity and spectra consisting of sharp peaks (with *FWHM* of about 0.3 nm) at random frequencies. Notably, this spectral signature, typical of coherent feedback random lasing, was the same from left and right emitting areas, placed at a large distance from each other. It's worth noting that this is, to the best of our knowledge, the first experimental observation of the same spectral signature from different random agglomerations of scattering centers.

This is understood as due to the onset of lasing action in the entire structure, where the pumped area acts as amplifying, gain-guided, waveguide and the scattering regions as feedback elements and output couplers. Feedback is given by the backscattered light from the scattering regions that re-enters the pumped area and close a feedback loop. Different intensity in same frequency peaks from left and right scatterers are attributed to direction and frequency dependent output coupling efficiency of each scattering region.

In samples with $TiO_2$, scattering was obtained due to the high refractive index difference between $TiO_2$ and DCM-doped DNA-CTMA film; in samples where no $TiO_2$ was added, scattering was given by the refractive index difference between polymer and air.

We performed further experiments with samples with no $TiO_2$, where scattering centers are produced by a rough interface between an active region and air. Different regions of the sample with no $TiO_2$ are illuminated with $L$ = 3 mm, $W$ = 50 $\mu$m and $E_P$ = 20 pJ/$\mu$m$^2$, see Fig. 1 (b). By changing the position of the pumped area, *i.e.* using different regions of the rough scattering surfaces, the emitted spectrum changed strongly. As shown in Fig. 5, the number and spectral positions of modes vary randomly, for each position considered. This is attributed to a different feedback contribution from regions of the interface polymer/air with different random roughness. However, for each position of the stripe the same spectral signature is always detected from both laser ends. We deduce that modes are selected by the joint contribution of the two opposite rough surfaces and each measurement corresponds to a different device, with its own spectrum. Notably the emission range that is obtained spans about 20 nm, suggesting that all available gain spectrum is used for lasing.

We performed further experiments, keeping the position of the pump and the pump flux constant and varying the width of the stripe, until all the four positions previously considered, see Fig. 1b, are included in the pumped area. Results are shown in Fig. 6. Only spectra detected from the right end of the laser are shown, for clarity, as the same spectrum is detected at the left end. For large values of $W,$ we verified that the same spectrum is emitted from any point of the scattering region.

As the pump width is increased, the detected spectrum changes randomly and different peaks appear at random frequency positions. The number of excited modes increases and the spectrum consists of a broad background and superimposed narrow spikes. For $W$ > 1.0 mm, no more narrow spikes are observed and a broad spectrum centered at 625 nm with *FWHM* of 10 nm, is measured. In this condition, the coherent contribution of the scattering surface is lost and amplitude-only feedback is obtained, resulting in incoherent feedback random lasing spectrum.

From a practical point of view, it is advantageous to avoid the use of the SLM and obtaining coherent random emission only by proper design of the device geometry. By simply cutting a narrow strip of the dye doped polymer film, we were able to obtain coherent feedback random lasing by uniform illumination of the entire sample. The width of the polymer stripe was imposed by the physical limitation of the manual process for film cutting, as stripes narrower than 600 $\mu$m were involuntary ripped away from the substrate.

A random laser (1) with dimensions of 2.6 mm×0.65 mm was obtained and results are shown in Fig. 7. Emission spectra are measured from different points of the sample edges, labeled I to IX in Figure 7a. The rough interface with air along the irregular edges of the film stripe serves as scattering element, similarly to experiments performed with the SLM. The measured spectra showed narrow spikes at random frequencies, superimposed onto a broad background. Frequency peaks are observed at the same spectral positions from distant points, indicating that the entire device is working as a single random laser (1) with very large area. This was the first experimental evidence of such extended area random laser (1).

## Claims

**1.** A random laser (1) **characterised by** comprising a sandwich structure with two scattering surfaces (3), with a first refractive index value, enclosing an optically active medium (2), with a second refractive index value, arranged between the surfaces (3); wherein the scattering surfaces (3) are uneven and the first refractive index value is different to the second refractive index value.

**2.** The random laser (1) according to claim 1, wherein at least one of the surfaces (3) comprises a plurality of particles (32) which are in contact with each other generating gaps that define pores (31).

**3.** The random laser (1) according to claim 1 or 2, wherein at least one of the surfaces (3) comprises pores (31).

**4.** The random laser (1) according to either claim 2 or 3, wherein the particles (32) are: nanoparticles with a maximum size of 30 nanometers or microparticles with a maximum size of 300 micron.

**6.** The random laser (1) according to any one of the preceding claims, wherein the particles (32) are made of a material selected from: $TiO_2$, SiO, and polymers.

**7.** The random laser (1) according to any one of the preceding claims, wherein the medium (2) is selected from the group consisting of: crystals, semiconductors, rare earth doped optical fibers, dyes and gases.

**8.** Method for producing a random laser (1) according to any one of claims 1 to 7, being the method **characterised by** comprising:

- generating the uneven scattering surfaces (3), and
- producing a sandwich structure by enclosing the optically active medium (2) between the uneven scattering surfaces (3).

**9.** The method of claim 8 wherein the generation of the uneven scattering surfaces (3) comprises fixing particles (32) along at least one of the surfaces (3), said particles being arranged in such a way that gaps (33) are defined between the particles (32).

**10.** The method of claim 9 wherein the particles (32) are randomly fixed along at least one of the surfaces (3) by particle deposition techniques.

**11.** The method of claim 8 wherein the generation of the uneven scattering surfaces (3) comprises modifying at least one of the surfaces (3) so that pores (31) are generated.

**12.** The method of claim 11 wherein the modification is carried out by a process selected from the group consisting of: chemical attack, mechanizing, and moulding.

**13.** The method of any one of claims 8 to 12 wherein the medium (2) is made of a material emitting light when excited.

**14.** Use of the random laser (1) for imaging application.

**Amended claims in accordance with Rule 137(2) EPC.**

**1.**    A random laser (1) **characterised by** comprising a sandwich structure with two scattering surfaces (3), with a first refractive index value, enclosing an optically active medium (2), with a second refractive index value, arranged between the surfaces (3); wherein the scattering surfaces (3) are uneven and the first refractive index value is different to the second refractive index value.

2. The random laser (1) according to claim 1, wherein at least one of the surfaces (3) comprises a plurality of particles (32) which are in contact with each other generating gaps that define pores (31).

3. The random laser (1) according to claim 1 or 2, wherein at least one of the surfaces (3) comprises pores (31).

4. The random laser (1) according to either claim 2 or 3, wherein the particles (32) are: nanoparticles with a maximum size of 30 nanometers or microparticles with a maximum size of 300 micron.

5. The random laser (1) according to any one of the preceding claims, wherein the particles (32) are made of a material selected from: $TiO_2$, SiO, and polymers.

6. The random laser (1) according to any one of the preceding claims, wherein the medium (2) is selected from the group consisting of: crystals, semiconductors, rare earth doped optical fibers, dyes and gases.

7. Method for producing a random laser (1) according to any one of claims 1 to 6, being the method **characterised by** comprising:

   - generating the uneven scattering surfaces (3), and
   - producing a sandwich structure by enclosing the optically active medium (2) between the uneven scattering surfaces (3).

8. The method of claim 7 wherein the generation of the uneven scattering surfaces (3) comprises fixing particles (32) along at least one of the surfaces (3), said particles being arranged in such a way that gaps (33) are defined between the particles (32).

9. The method of claim 8 wherein the particles (32) are randomly fixed along at least one of the surfaces (3) by particle deposition techniques.

10. The method of claim 7 wherein the generation of the uneven scattering surfaces (3) comprises modifying at least one of the surfaces (3) so that pores (31) are generated.

11. The method of claim 10 wherein the modification is carried out by a process selected from the group consisting of: chemical attack, mechanizing, and moulding.

12. The method of any one of claims 7 to 11 wherein the medium (2) is made of a material emitting light when excited.

13. Use of the random laser (1) for imaging application.

FIG. 1

FIG. 2

FIG. 3

FIG.4

FIG. 5

FIG. 6

a

b

$x_c = 357$ nm

c

TiO₂  dye solution  TiO₂

full SLM

FIG. 7

(a)

polymer

TiO₂  TiO₂

1 mm

(b)

polymer

air  air

1 mm

(c)

y
x

SPEC

M  CCD

F  IL  BS

sample

f₂  f₁

M₂  SLM

M₁  BE  PUMP

FIG. 8

FIG. 9

FIG. 10

FIG. 11

FIG. 12

(a)

(b)

FIG.13

FIG.14

Europäisches
Patentamt

European
Patent Office

Office européen
des brevets

# EUROPEAN SEARCH REPORT

Application Number

EP 15 18 6896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANNI M: "A flexible organic random laser based on poly(9,9-dioctylfluorene) deposited on a surface corrugated poly-phthalate-carbonate substrate", APPLIED PHYSICS LETTERS, AMERICAN INSTITUTE OF PHYSICS, 2 HUNTINGTON QUADRANGLE, MELVILLE, NY 11747, vol. 98, no. 25, 20 June 2011 (2011-06-20), pages 253304-253304, XP012141177, ISSN: 0003-6951, DOI: 10.1063/1.3601854 | 1,6,7, 12,13 | INV. H01S3/08<br><br>ADD. H01S3/094 H01S3/213 |
| Y | * pages 253304-1, left-hand column, paragraph 1 - pages 253304-3, left-hand column, paragraph 2; figures 1,2,4 * ----- | 2-5,8-11 | |
| Y | ZHANG HONG ET AL: "Coherent random lasing from liquid waveguide gain channels with biological scatters", APPLIED PHYSICS LETTERS, AMERICAN INSTITUTE OF PHYSICS, 2 HUNTINGTON QUADRANGLE, MELVILLE, NY 11747, vol. 105, no. 25, 22 December 2014 (2014-12-22), XP012193117, ISSN: 0003-6951, DOI: 10.1063/1.4905035 [retrieved on 1901-01-01] * pages 253702-1, left-hand column, paragraph 1 - pages 253702-3, right-hand column, paragraph 2; figures 1-3 * ----- | 1-13 | |

| | |
|---|---|
| | TECHNICAL FIELDS SEARCHED (IPC) |
| | H01S |

-/--

The present search report has been drawn up for all claims

| Place of search | Date of completion of the search | Examiner |
|---|---|---|
| Munich | 15 March 2016 | Laenen, Robert |

EPO FORM 1503 03.82 (P04C01)

Europäisches
Patentamt

European
Patent Office

Office européen
des brevets

## EUROPEAN SEARCH REPORT

Application Number

EP 15 18 6896

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LEI XU ET AL: "Random Laser Emission from Surface-corrugated Waveguide", LASERS AND ELECTRO-OPTICS, 2005. CLEO/PACIFIC RIM 2005. PACIFIC RIM CONFERENCE ON TOKYO, JAPAN 30-02 AUG. 2005, PISCATAWAY, NJ, USA,IEEE, 30 August 2005 (2005-08-30), pages 936-938, XP010872696, DOI: 10.1109/CLEOPR.2005.1569611 ISBN: 978-0-7803-9242-7 * page 936, left-hand column, paragraph 1 - page 937, right-hand column, paragraph 2; figures 1-3 * | 1-13 | |
| A | FUJITA K ET AL: "Morphological control and strong light scattering in macroporous $TiO_2$ monoliths prepared via a colloid-derived sol-gel route", SCIENCE AND TECHNOLOGY OF ADVANCED MATERIALS, ELSEVIER SCIENCE, vol. 7, no. 6, 1 September 2006 (2006-09-01), pages 511-518, XP028057363, ISSN: 1468-6996, DOI: 10.1016/J.STAM.2006.04.014 [retrieved on 2006-09-01] * page 511, left-hand column, paragraph 1 - page 517, right-hand column, paragraph 1; figures 1-4 * | 2-5,8-10 | |

TECHNICAL FIELDS SEARCHED (IPC)

The present search report has been drawn up for all claims

| Place of search | Date of completion of the search | Examiner |
|---|---|---|
| Munich | 15 March 2016 | Laenen, Robert |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **REDDING, B. ; CHOMA, M. A. ; CAO, H.** Speckle-free laser imaging using random laser illumination. *Nature Photon.,* 2012, vol. 6, 355-359
- **CAO, H. et al.** Ultraviolet lasing in resonators formed by scattering in semiconductor polycrystalline films. *Appl. Phys. Lett.,* 1998, vol. 73, 3656-3658
- **AMBARTSUMYAN, R. V. ; BASOV, N. ; KRYUKOV, P. ; LETOKHOV, V. S.** A laser with a nonresonant feedback. *IEEE J. Quantum Electron.,* 1966, vol. 2, 442-446
- **AMBARTSUMYAN, R. V. ; BASOV, N., ; KRYUKOV, P. ; LETOKHOV, V. S.** Non-resonant feedback in lasers. *Prog. Quant. Electron.,* 1970, vol. 1, 107-120
- **WIERSMA, D. S. ; LAGENDIJK, A.** Light diffusion with gain and random lasers. *Phys. Rev. E,* 1996, vol. 54, 4256-4265